(19) **Europäisches Patentamt / European Patent Office / Office européen des brevets**

(11) **EP 1 452 240 B1**

(12) **EUROPEAN PATENT SPECIFICATION**

(45) Date of publication and mention
of the grant of the patent:
**10.08.2011 Bulletin 2011/32**

(21) Application number: **02802712.6**

(22) Date of filing: **01.11.2002**

(51) Int Cl.:
**B05D 1/36** (2006.01)   **B05D 5/00** (2006.01)

(86) International application number:
**PCT/JP2002/011431**

(87) International publication number:
**WO 2003/039767 (15.05.2003 Gazette 2003/20)**

(54) **METHOD FOR FORMING MULTILAYER COATING FILM**

VERFAHREN ZUR HERSTELLUNG EINES MEHRLAGIGEN FILMÜBERZUGS

PROCEDE DE FORMATION DE FILM A REVETEMENT MULTICOUCHES

(84) Designated Contracting States:
**DE GB**

(30) Priority: **05.11.2001 JP 2001339730**

(43) Date of publication of application:
**01.09.2004 Bulletin 2004/36**

(73) Proprietors:
• **KANSAI PAINT CO., LTD.**
**Amagasaki-shi, Hyogo-ken 661-8555 (JP)**
• **HONDA GIKEN KOGYO KABUSHIKI KAISHA**
**Minato-ku,**
**Tokyo 107-8556 (JP)**

(72) Inventors:
• **IHARA, Satoru,**
**Kabushiki Kaisha Honda**
**Wako-shi, Saitama 351-0193 (JP)**
• **IKEHARA, Shinichi,**
**Kabushiki Kaisha Honda**
**Wako-shi, Saitama 351-0193 (JP)**
• **KURAMOCHI, Shigeru**
**Kanuma-shi, Tochigi 322-0025 (JP)**
• **TOKAMI, Wataru**
**Fukushima 967-0302 (JP)**
• **OKAMOTO, Yoshiyuki**
**Westlake, OH 44145 (US)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A- 0 914 875     EP-A- 1 050 346**
**EP-A- 1 134 037     JP-A- 1 287 183**
**JP-A- 8 206 593**

**Description**

**Technical Field**

The present invention relates to a process for forming a plural layer coating film which is improved in a chipping resistance and a corrosion resistance, comprising coating in order a cationically electrodepositable coating material, an intermediate coating material and a top coating material on an article to be coated, particularly a car body.

**Background Art**

It is regarded as important to improve a durability of a plural layer coating film coated on an outside plate part of a car body, particularly prevent impact peeling caused by collision of small stones during running, a reduction in the corrosion resistance originating in it and a progress in corrosion of a steel material. For example, gravel mixed with a large amount of rock salt is spread in a cold district in Europe and America in many cases in order to prevent automobile roads from freezing in a winter season. When cars run on such roads, often caused is the phenomenon that rock salt particles and small stones which are spattered by wheels collide against a coating film face of a car body and the coating film is locally peeled by the impact thereof, so-called "chipping". Brought about are the problems that a metal face in the impacted part on an outside face of a car body is exposed by this impact peeling and that rusting starts from this part and corrosion is liable to go on. Further brought about is the problem that a top coating film is peeled to markedly damage the fine appearance of the coated face. Usually, peeling of a coating film caused by chipping is caused on a body bottom and a wheeling part of an automobile in many cases, and it is known that peeling is caused as well on a hood and roof and that local corrosion goes on to a considerable extent in about a half year or one year.

In order to prevent corrosion of a metal plate originating in chipping from going on, the present applicant proposed formerly to coat a barrier coat comprising a modified polyolefin base resin as a principal component between an electrodepositable coating film and an intermediate coating film (for example, Japanese Patent Application Laid-Open No. 120673/1986). This modified polyolefin base resin is relatively highly polymerized and requires a large amount of an organic solvent for diluting to a coating viscosity, and therefore it is not preferred in terms of safety and sanitation of coating workers in coating, environmental pollution after coating and unsafety such as risk of fire and explosion in coating and baking. Further, when an intermediate coating material and a top coating material are coated while this barrier coating film is not cured, a plural layer coating film formed is reduced in a finishing appearance such as a flatness in a certain case, and therefore the existing situation is that after the barrier coating film is heated and cured, the intermediate coating material and the top coating material are coated.

European patent application EP 0 914 875 A2 describes a process to form a multilayer coating film characterized in that after a cationic electrodeposition coating is coated and cured by heating, an intermediate coating, having a solid content in the range of 60 to 90% by weight and comprising polymerizable unsaturated compound, photopolymerization initiator, thermal polymerization initiator, and further optionally pigment and/or polyester resin and crosslinking agent, is coated, and said coating film is cured by irradiation with an actinic ray, and then a thermocurable top coating is coated and cured by heating, is disclosed.

Intensive researches repeated by the present inventors have resulted in finding that the problems described above can be solved by providing a coating film comprising a water based thermoplastic chipping resistant coating material between a cationically electrodepositable coating film and an intermediate coating film, and thus they have come to complete the present invention.

**Disclosure of the Invention**

Thus, the present invention relates to a plural layer coating film-forming process, comprising the steps of coating a cationically electrodepositable coating material (a) on an article to be coated and curing it by heating, then coating a water based thermoplastic chipping resistant coating material (b) and controlling a solid content in the coating film to 40 % by weight or more, thereafter coating a water based intermediate coating material (c) and curing both coating films of the coating material (b) and the coating material (c) by heating and then coating thereon a top coating material (d) and curing it, wherein the water based thermoplastic chipping resistant coating material (b) is a coating material comprising a self emulsible type polyurethane emulsion obtained by water-extending and emulsifying a urethane prepolymer obtained by reacting (i) aliphatic and/or alicyclic diisocyanate, (ii) polyetherdiol and/or polyesterdiol having a number average molecular weight of 500 to 5000, (iii) a low molecular weight polyhydroxyl compound and (iv) dimethylolalkanoic acid in an NCO/OH equivalent ratio falling in a range 1.1 to 1.9 by mixing with water after or while neutralizing with tertiary amine.

The plural layer coating film-forming process of the present invention (hereinafter referred to as "the present process") shall be explained in further details.

Article to be coated:

An article comprising a material having an electroconductive metal surface which can be cationically electrodepositably coated can be used for the article to be coated which is a base material making it possible to form thereon a plural layer coating film by the present process. To be specific, such material includes, for example, plates of iron, copper, aluminum and alloys containing these metals and products on which these metals or alloys are plated or deposited, and the present process can be applied to car bodies of passenger cars, trucks, busses and auto-bicycles in which these materials are used. The surfaces of these articles to be coated are preferably subjected in advance to chemical conversion treatment with phosphates and chromates prior to cationically electrodepositable coating.

Cationically electrodepositable coating material (a):

Conventionally known coating materials which are usually used as a primer in coating on a metallic base material can be used for the cationically electrodepositable coating material (a) coated on the foregoing article to be coated according to the present process. To be specific, capable of being used is a water based coating material obtained by blending a basic water-soluble or water-dispersible resin which can be dissolved or dispersed in water by neutralizing with an organic acid or an inorganic acid, for example, a resin of an epoxy base, an acryl base and a polybutadiene base which have a lot of amino groups in a resin skeleton with a neutralizing agent, a pigment (a color pigment, an extender pigment, a rust preventive pigment and the like), a hydrophilic solvent and, if necessary, a curing agent, a cross-linking agent and additives and turning them into a coating material by a conventional method. Organic acids such as acetic acid, hydroxylacetic acid, propionic acid, butylic acid, lactic acid and glycine and inorganic acids such as sulfuric acid, hydrochloric acid and phosphoric acid can be used as the neutralizing agent for dissolving or dispersing the basic water-soluble or water-dispersible resin in water. A blending amount of these neutralizing agents is suitably controlled so that a neutralizing equivalent to a basic value (usually falling in a range of about 30 to about 200 mg KOH/g) of the resin described above falls in a range of about 0.1 to about 0.4.

The cationically electrodepositable coating material (a) is diluted with deionized water so that a solid matter content is 5 to 40 % by weight, preferably 8 to 30 % by weight, and it can be cationically electrodepositably coated on an article to be coated by a conventional method while maintaining the pH in a range of 5.5 to 8.0. A thickness (film thickness) of the electrodeposited coating film formed shall not specifically be restricted and falls preferably in a range of about 10 to about 40 $\mu$m, particularly preferably about 15 to about 30 $\mu$m in terms of a cured coating film thickness. The cationically electrodepositable coating film formed can be cured by heating at a temperature of about 140 to about 210°C, preferably about 160 to about 180°C for 10 to 40 minutes.

Water based thermoplastic chipping resistant coating material (b):

The water based thermoplastic chipping resistant coating material (b) coated on the cationically electrodepositably coated face formed and cured in the manner described above is a water based thermoplastic coating material forming a coating film which is excellent in a chipping resistance, and is a coating material comprising a polyurethane emulsion obtained by extending a chain of a carboxyl group-containing urethane polymer in the presence of an aqueous medium.

Suitably used as the polyurethane emulsion described above is a self emulsible type polyurethane emulsion obtained by water-extending and emulsifying a urethane prepolymer obtained by reacting (i) aliphatic and/or alicyclic diisocyanate, (ii) polyetherdiol and/or polyesterdiol having a number average molecular weight of 500 to 5000, (iii) a low molecular weight polyhydroxyl compound and (iv) dimethylolalkanoic acid in an NCO/OH equivalent ratio falling in a range 1.1 to 1.9 by mixing with water after or while neutralizing with tertiary amine.

To be more specific, (i) aliphatic and/or alicyclic diisocyanate, (ii) polyetherdiol or polyesterdiol having a number average molecular weight of 500 to 5000, preferably 1000 to 3000 or a mixture thereof, (iii) a low molecular weight polyhydroxyl compound and (iv) dimethylolalkanoic acid are polymerized in an NCO/OH equivalent ratio falling in a range 1.05 to 1.9, preferably 1.1 to 1.5 in the presence or absence of a hydrophilic organic solvent containing no active hydrogen group in a molecule by a one shot method or a multistage method to synthesize a urethane prepolymer, and then this prepolymer is mixed with water after or while diluting with tertiary amine, whereby it is subjected to water extending reaction and emulsification-dispersed in water. Then, the organic solvent described above is at least partially distilled off, if necessary, whereby a polyurethane emulsion can be prepared. The emulsion thus obtained is usually a water dispersion of a self emulsible type urethane resin in which an average particle diameter of particles falls in a range of 0.001 to 1.0 $\mu$m, preferably 0.01 to 0.8 $\mu$m.

The aliphatic and/or alicyclic diisocyanate (i) include aliphatic diisocyanates having 2 to 12 carbon atoms, for example, hexamethylenediisocyanate, 2,2,4-trimethylhexanediisocyanate and lysinediisocyanate; alicyclic diisocyanates having 4 to 18 carbon atoms, for example, 1,4-cyclohexanediisocyanate, 1-isocyanate-3-isocyanatemethyl-3,5,5-trimethylcyclohexane (isophoronediisocyanate), 4,4'-dicyclohexylmethanediisocyanate, methylcyclohexylenediisocyanat and isopropylidenedicyclohexyl-4,4'-diisocyanate; modified products of these diisocyanates (carbodiimide, urethodione and urethoimine-containing modified products); and mixtures of two or more kinds thereof. Among them, suited is alicyclic diisocyanate selected from 1,4-cyclohexanediisocyanate, 1-isocyanate-3-isocyanatemethyl-3,5,5-trimethylcyclohexane and 4,4'-dicyclohexylmethanediisocyanate.

The polyetherdiol and polyesterdiol (ii) having a number average molecular weight of 500 to 5000, preferably 1000 to 3000 (ii) include, for example, compounds obtained by polymerizing or copolymerizing (block or random) alkylene oxide (for example, ethylene oxide, propylene oxide and butylene oxide) and/or heterocyclic ether (for example, tetrahydrofuran and the like), for example, polyethylene glycol, polypropylene glycol, polyethylene-propylene (block or random) glycol, polytetramethylene ether glycol, polyhexamethylene ether glycol and polyoctamethylene ether glycol; compounds obtained by polycondensing dicarboxylic acid (for example, adipic acid, succinic acid, sebacic acid, glutaric acid, maleic acid, fumaric acid and phthalic acid) with glycol (for example, ethylene glycol, propylene glycol, 1,4-butanediol, 1,6-hexanediol, 3-methyl-1,5-pentanediol, neopentyl glycol and bishydroxymethylcyclohexane), for example, polyethylene adipate, polybutylene adipate, polyhexamethylene adipate, polyneopentyl adipate, poly-3-methylpentyl adipate, polyethylene/butylene adipate and polyneopentyl/hexyl adipate; polylactonediol, for example, polycaprolactonediol and poly-3-methylvalerolactonediol; polycarbonatediol; and mixtures of two or more kinds thereof.

The low molecular weight polyhydroxyl compound (iii) is a compound having a number average molecular weight of less than 500 and having at least two hydroxyl groups in a molecule, and it includes, for example, glycols given as the raw materials for the polyesterdiol described above and alkylene oxide low mole adducts thereof (molecular weight: less than 500); trihydric alcohols, for example, glycerin, trimethylolethane, trimethylolpropane and alkylene oxide low mole adducts thereof (molecular weight: less than 500); and mixtures of two or more kinds thereof.

The low molecular weight polyhydroxyl compound (iii) can be used usually in a range of 0.1 to 20 % by weight, preferably 0.5 to 10 % by weight based on the polyetherdiol or polyesterdiol (ii) described above.

The dimethylolalkanoic acid (iv) includes, for example, dimethylolacetic acid, dimethylolpropionic acid and dimethylolbutylic acid, and dimethylolpropionic acid is particularly suited. The dimethylolalkanoic acid can be used in such an amount that a content of a carboxyl group (-COOH) contained in the urethane prepolymer obtained by reacting (i) to (iv) falls in a range of 0.5 to 5 % by weight, preferably 1 to 3 % by weight. This carboxyl group is effective for elevating a layer-to-layer adhesive property between the cationically electrodepositable coating film and the intermediate coating film.

To be specific, the tertiary amine used for neutralizing the urethane prepolymer obtained by polymerizing the components (i) to (iv) each described above includes, for example, trialkylamines, for example, trimethylamine, triethylamine, triisopropylamine, tri-n-propylamine and tri-n-butylamine; N-alkylmorpholines, for example, N-methylmorpholine and N-ethylmorpholine; and N-dialkylalkanolamines, for example, N-dimethylethanolamine and N-diethylethanolamine. Among them, trialkylamines are preferred, and among them, triethylamine is particularly preferred. The tertiary amine can be used in a proportion of usually 0.5 to 1 equivalent, preferably 0.7 to 1 equivalent per equivalent of a carboxyl group contained in the urethane prepolymer.

The water based thermoplastic chipping resistant coating material (b) can be prepared by suitably blending the polyurethane emulsion described above with an organic solvent, an extender pigment, a color pigment, a UV absorber, an antioxidant and a surfactant. Among them, preferably used as the organic solvent is, for example, a hydrophilic organic solvent such as butyl cellosolve, butyl carbitol, hexyl cellosolve and 2-ethylhexyl alcohol.

The water based thermoplastic chipping resistant coating material (b) is preferably coated on the cured cationically electrodepositable coating film face by spray coating, brush coating or dipping coating after adjusting, for example, a viscosity to 20 to 60 seconds/Ford cup #4/20°C, preferably 30 to 50 seconds/Ford cup #4/20°C and a solid content to 20 to 50 % by weight, preferably 30 to 40 % by weight. The coating film thickness falls suitably in a range of about 2 to about 15 $\mu$m, preferably about 5 to about 10 $\mu$m in terms of a dried film thickness.

In the present process, a content of a solid matter contained in the coating film of the water based thermoplastic chipping resistant coating material (b) coated on the cured coating film face of the cationically electrodepositable coating material (a) is controlled to a range of 40 % by weight or more, preferably 60 to 90 % by weight and more preferably 70 to 80 % by weight, and then the water based intermediate coating material (c) is coated thereon. If the water based intermediate coating material (c) is coated when a content of the solid matter contained in the coating film of the water based thermoplastic chipping resistant coating material (b) is less than 40 % by weight, the resulting plural layer coating film is reduced in a finished appearance, and therefore it is not preferred.

A content of the solid matter contained in the coating film formed from the water based thermoplastic chipping resistant coating material (b) can be controlled by, for example, air-drying the coating film thereof at a temperature of usually a room temperature to 100°C, preferably a room temperature to 60°C for 1 to 10 minutes, preferably 2 to 5 minutes. When the water based thermoplastic chipping resistant coating material (b) having a solid content of 40 % by weight or more is used, the water based intermediate coating material (c) can be coated thereon without air-drying the coating film thereof as it is.

A content of the solid matter contained in the coating film of the water based thermoplastic chipping resistant coating material (b) is a value calculated by applying a measured value to the following equation, wherein the measured value is obtained by coating the water based thermoplastic chipping resistant coating material (b) on an aluminum foil the weight (X) of which is measured in advance, suitably drying it, measuring the weight (Y) thereof, subsequently drying it by heating at 140°C for 30 minutes and then measuring the weight (Z) thereof:

$$\text{solid content (weight \%)} = (Z - X) / (Y - X) \times 100$$

Water based intermediate coating material (c):

A conventionally known water based intermediate coating material which is excellent in an adhesive property, a flatness, a clearness, an over-baking resistance and a weatherability can be used for the water based intermediate coating material (c) coated on the coating film face of the water based thermoplastic chipping resistant coating material (b) in which a content of a solid matter contained in the coating film is adjusted to 40 % by weight or more according to the present process. To be specific, capable of being suitably used is a water based intermediate coating material comprising as vehicle primary components, a short oil or extra short oil alkyd resin having an oil length of 30 % or less or an oil-free polyester resin as a base resin and an amino resin as a cross-linking agent. These alkyd resin and polyester resin are preferably those having a hydroxyl value of 60 to 140 mg KOH/g, particularly 70 to 120 mg KOH/g and an acid value of 10 to 50 mg KOH/g, particularly 15 to 45 mg KOH/g and using an unsaturated oil or an unsaturated fatty acid as a modifying oil. Suited for the amino acid as the cross-linking agent are, for example, alkyl(1 to 5 carbon atoms) etherified melamine resins, urea resins and benzoguanamine resins. A blending proportion of the base resin and the cross-linking agent falls preferably in a range of 65 to 85 %, particularly 70 to 80 % for the alkyd resin and/or the oil-free polyester resin and 35 to 15 %, particularly 30 to 20 % for the amino resin based on the weight of the solid matter. A polyisocyanate compound or a blocked polyisocyanate compound can also be used as the cross-linking agent in place of the amino resin described above. Further, the water based intermediate coating material (c) can be blended, if necessary, with additives for a coating material such as an extender pigment, a color pigment and the others.

A coating material forming a cured coating film having a hardness (pencil hardness) falling in a range of 3B to 2H, particularly 2B to H is preferred as the water based intermediate coating material (c).

The water based intermediate coating material (c) can be coated on the coating film face of the water based thermoplastic chipping resistant coating material (b) by the same method as described above, and the coating film thickness falls preferably in arrange of usually about 20 to 50 $\mu$m, particularly about 25 to 40 $\mu$m in terms of a cured coating film thickness. After coating, both coating films of the coating materials (b) and (c) can be cured by heating at a temperature of about 120 to about 170°C, particularly about 120 to about 150°C for 10 to 40 minutes.

Top coating material (d):

The top coating material (d) coated on the coated face of the heated and cured intermediate coating material (c) has a purpose of providing a coated article with fineness, and conventionally known coating materials forming a coating film which is excellent in a clearness, a flatness, a glossiness, a weatherability and a chemical resistance can be used. To be specific, capable of being used are, for example, liquid coating materials of an acryl resin-amino resin base, an alkyd resin-amino resin base and a polyester resin-amino resin base. The form of this liquid coating material includes an organic solvent type, a non-water dispersion type, an aqueous solution type and a water dispersion type.

These top coating materials are classified into a solid color coating material blended with a solid color pigment, a metallic color coating material blended with a metallic pigment and a clear coating material which does not contain or scarcely contains these pigments. In the present process, these pigments can suitably be used to form a top coating film by a one coat system or a two coat system (2C1B or 2C2B).

To be specific, included are, for example, a solid color finishing method carried out by a one coat system in which a solid color coating material is coated on a heated and cured intermediate coating film face in a thickness of about 10 to about 40 $\mu$m in terms of a cured coating film thickness and in which it is heated at a temperature of about 100 to about 160°C for 10 to 40 minutes; and a solid color or metallic finishing method carried out by a two coat one bake system (2C1B) or a two coat two bake system (2C2B) in which a solid color coating material or a metallic coating material is coated on a heated and cured intermediate coating film face in a thickness of about 10 to about 30 $\mu$m in terms of a cured coating film thickness and in which a clear coating material is coated thereon in a thickness of about 20 to about 60 $\mu$m in terms of a cured coating film thickness after curing by heating or in a non-curing state and it is heated at a temperature of about 100 to about 160°C for 10 to 40 minutes.

According to the present process, a coating film formed from the specific water based thermoplastic chipping resistant coating material (b) is interposed between the cationically electrodepositable coating film and the intermediate coating film, whereby a plural layer coating film finally obtained can notably be improved in a chipping resistance. The reason therefore is not precisely known, and it is estimated that the coating film of the water based thermoplastic chipping resistant coating material (b) is formed from a high molecular coating film having a flexible and elastic bond such as urethane and this makes it possible to absorb an energy of an external force (stone) and that this elevates a chipping resistance of a plural layer coating film finally formed.

Further, the water based thermoplastic chipping resistant coating material (b) has excellent advantages such as (1) having no problems in terms of environmental pollution and safety, (2) forming a coating film having an excellent fineness by baking at the same time as the intermediate coating film, (3) having a good adhesive property to the cationically electrodepositable coating film and (4) having a good adhesive property to the intermediate coating film.

The present invention shall more specifically be explained below with reference to examples and comparative examples. Parts and percentage are based on weight in all cases, and a film thickness of a coating film is that of a cured coating film.

**Examples**

1. Preparation of samples

1) Metal plate:

Palbond #3030 (dull steel plate treated with zinc phosphate, manufactured by Nippon Parkerizing Co., Ltd.).

2) Cationically electrodepositable coating material (a):

"Elecron #HG-10" (trade name, epoxy polyamide base cation type electrodepositable coating material, manufactured by Kansai Paint Co., Ltd.).

3) Water based thermoplastic chipping resistant coating material (b):

Polybutylene adipate (number average molecular weight: 2000) 230 g, polycaprolactonediol (number average molecular weight: 2000) 230 g, dimethylolpropionic acid 46 g, 1,4-butanediol 13 g and isophoronediisocyanate 240 g were reacted to obtain an NCO prepolymer having an NCO content of less than 4.0 %.

Next, acetone 330 g was added to the prepolymer thus obtained and homogeneously dissolved it. Then, triethylamine 31 g was added under stirring, and ion-exchanged water 1200 g was further added thereto. The resulting water dispersion was maintained at 50°C for 2 hours to complete water extending reaction, and then acetone was distilled off under reduced pressure to obtain a polyurethane emulsion PU1 having a solid content of 42 %.

This polyurethane emulsion PU1 238 parts, titanium white 50 parts, carbon black 1 part and butyl cellosolve 40 parts were mixed and dispersed in deionized water 100 parts to obtain the thermoplastic chipping resistant coating material (b) which was controlled to a viscosity of 40 seconds/Ford cup #4/20°C and a solid content of 35 %.

4) Water based intermediate coating material (c):

"Askabake WP" (trade name, alkyd resin -amino resin base water based intermediate coating material, manufactured by Kansai Paint Co., Ltd.).

5) Top coating material (d):

Used were "Magicron Silver" (trade name, acryl resin -amino resin base organic solvent type silver metallic top coating material, manufactured by Kansai Paint Co., Ltd.) and "Magicron Clear" (trade name, acryl resin -amino resin base organic solvent type clear top coating material, manufactured by Kansai Paint Co., Ltd.).

2. Examples and comparative examples

Example 1

The cationically electrodepositable coating material (a) was cationically electrodepositably coated on the metal plate in a coating film thickness of 20 $\mu$m by a conventional method, and it was heated at 170°C for 30 minutes after washing with water to cure the coating film. Next, the water based thermoplastic chipping resistant coating material (b) was coated on this electrodepositable coating face in a dry film thickness of 10 $\mu$m by spraying and air-dried at a room temperature for 3 minutes to control a solid content in the coating film to 70 %, and then the water based intermediate coating material (c) was coated in a dry film thickness of 30 $\mu$m and cured by heating at 140°C for 30 minutes. Next, coated thereon by wet-on-wet were"Magicron Silver" in a film thickness of 15 $\mu$m and then Magicron Clear" in a film thickness of 35 $\mu$m, and both coating films were cured by heating at 140°C for 30 minutes to form a plural layer coating film. The plural layer coating film thus obtained had a good finishing property, a good chipping resistance (*1) and an impact resistance (*2) of 50 cm or more.

Comparative Example 1

The same procedure as in Example 1 was repeated to form a plural layer coating film, except that in Example 1, a solid content in the coating film of the water based thermoplastic chipping resistant coating material (b) was changed to 30 %. The plural layer coating film thus obtained had an inferior finishing property, an inferior chipping resistance (*1) and an impact resistance (*2) of 30 cm. (*1) Chipping resistance: Q-C-R Glaberometer (trade name, manufactured by Q Panel Co., Ltd.) was used to blow 500 ml of broken stones having a diameter of 15 to 29 mm onto the coating face at a pressure of 2 kg/cm$^2$, a temperature of about 20°C and a blowing angle of 45° to the coating face, and then the coating face was visually evaluated according to the following criteria:

O: (good) scratches formed by impact are slightly observed on the top coating film, but peeling of the electrodepositable coating film is not observed;
$\Delta$: (a little inferior) a lot of scratches formed by impact are observed on the top coating film, and peeling of the electrodepositable coating film is a little observed as well;
$\times$: (inferior) a lot of scratches formed by impact are observed on the top coating film, and a lot of peeling of the electrodepositable coating film is observed as well.

(*2) Impact resistance: a Du Pont impact tester was used, and an impact pin of 1/2 inch was fallen on the condition of a load of 500 g to determine a height (cm) at which the coating film was not broken.

As described above, the water based thermoplastic chipping resistant coating material (b) used in the present process is water-based and therefore has no problems in terms of environmental pollution and safety. In addition thereto, it provides the excellent effects that the coating film having an excellent flatness can be formed by baking at the same time as the intermediate coating film and that it has a good adhesive property to the electrodepositable coating film and the intermediate coating film. Further, the cdating film of the chipping resistant coating material (b) is formed from a high molecular coating film having a bond such as urethane, and this makes it possible to absorb an energy of an external force (stone), so that the plural layer coating film finally formed is notably improved in a chipping resistance.

## Claims

1.   A plural layer coating film-forming process, comprising the steps of coating a cationically electrodepositable coating material (a) on an article to be coated and curing it by heating, then coating a water based thermoplastic chipping resistant coating material (b) and controlling a solid content in the coating film to 40 % by weight or more, thereafter coating a water based intermediate coating material (c) and curing both coating films of the coating material (b) and the coating material (c) by heating and then coating thereon a top coating material (d) and curing it,
said water based thermoplastic chipping resistant coating material (b)being a coating material comprising a self emulsible type polyurethane emulsion obtained by water-extending and emulsifying a urethane prepolymer obtained by reacting (i) aliphatic and/or alicyclic diisocyanate, (ii) polyetherdiol and/or polyesterdiol having a number average molecular weight of 500 to 5000, (iii) a low molecular weight polyhydroxyl compound and (iv) dimethylolalkanoic acid in an NCO/OH equivalent ratio falling in a range 1.1 to 1.9 by mixing with water after or while neutralizing with tertiary amine.

2.   The process as described in Claim 1, wherein the diisocyanate (i) is alicyclic diisocyanate selected from 1,4-cyclohexanediisocyanate, 1-isocyanate-3-isocyanatemethyl-3,5,5-trimethylcyclohexane and 4,4'-dicyclohexylmethanediisocyanate.

3.   The process as described in Claim 1, wherein the polyetherdiol and/or polyesterdiol (ii) has a number average molecular weight falling in a range of 1000 to 3000.

**4.** The process as described in Claim 1, wherein the low molecular weight polyhydroxyl compound (iii) is selected from glycols, alkylene oxide low mole adducts thereof having a molecular weight of less than 500, glycerin, trimethylolethane, trimethylolpropane and alkylene oxide low mole adducts thereof having a molecular weight of less than 500.

**5.** The process as described in Claim 1, wherein the dimethylolalkanoic acid is dimethylolpropionic acid.

**6.** The process as described in Claim 1, wherein the urethane polymer contains 0.5 to 5 % by weight of a carboxyl group.

**7.** The process as described in Claim 1, wherein the tertiary amine is trialkylamine.

**8.** The process as described in Claim 1, wherein the water based thermoplastic chipping resistant coating material (b) has a viscosity of 20 to 50 seconds/Ford cup #4/20°C and a solid content of 20 to 50 % by weight.

**9.** The process as described in Claim 1, wherein the water based thermoplastic chipping resistant coating material (b) is coated in a thickness of about 2 to about 15 $\mu$m in terms of a dry film thickness.

**10.** The process as described in Claim 1, wherein a solid content in the coating film of the water based thermoplastic chipping resistant coating material (b) is controlled in a range of 60 to 90 % by weight, preferably 70 to 80 % by weight.

**11.** The process as described in Claim 1, wherein the water based thermoplastic chipping resistant coating material (b) is air-dried to thereby control a solid content in the coating film thereof.

**12.** An article on which a plural layer coating film is formed by the process as described in Claim 1.

**Patentansprüche**

**1.** Verfahren zur Bildung eines Überzugsfilms mit mehreren Schichten, umfassend die Schritte: Auftragen eines kationisch abscheidbaren Überzugsmaterials (a) auf einen zu beschichtenden Gegenstand und Härten desselben durch Erhitzen, anschließend Auftragen eines thermoplastischen abplatzbeständigen Überzugsmaterials auf Wasserbasis (b) und Einstellen eines Feststoffgehalts im Überzugsfilm auf 40 Gew.-% oder mehr, und anschließend Auftragen eines Zwischenüberzugsmaterials auf Wasserbasis (c) und Härten beider Überzugsfilme des Überzugsmaterials (b) und des Überzugsmaterials (c) durch Erhitzen und anschließend Auftragen eines Decküberzugmaterials (d) darauf und Härten desselben, wobei das thermoplastische abplatzbeständige Überzugsmaterial auf Wasserbasis (b) ein Überzugsmaterial ist, umfassend eine Polyurethanemulsion vom selbstemulgierenden Typ, erhalten durch Strecken mit Wasser und Emulgieren eines Urethanpräpolymers, erhalten durch Umsetzen von (i) aliphatischem und/oder alicyclischem Diisocyanat, (ii) Polyetherdiol und/oder Polyesterdiol mit einem zahlenmittleren Molekulargewicht von 500 bis 5000, (iii) einer niedermolekularen Polyhydroxylverbindung und (iv) Dimethylolalkansäure mit einem NCO/OH-Äquivalentverhältnis, das in einen Bereich von 1,1 bis 1,9 fällt, durch Mischen mit Wasser nach oder während dem Neutralisieren mit einem tertiären Amin.

**2.** Verfahren wie in Anspruch 1 beschrieben, wobei das Diisocyanat (i) ein aliphatisches Diisocyanat ist, ausgewählt aus 1,4-Cyclohexandiisocyanat, 1-Isocyanat-3-isocyanatmethyl-3,5,5-trimethylcyclohexan und 4,4'-Dicyclohexylmethandiisocyanat.

**3.** Verfahren wie in Anspruch 1 beschrieben, wobei das Polyetherdiol und/oder Polyesterdiol (ii) ein zahlenmittleres Molekulargewicht, das in einen Bereich von 1000 bis 3000 fällt, besitzt.

**4.** Verfahren wie in Anspruch 1 beschrieben, wobei die niedermolekulare Polyhydroxylverbindung (iii) ausgewählt ist aus Glykolen, Alkylenoxid-niedermolaren Addukten davon mit einem molekularen Gewicht von weniger als 500, Glyzerin, Trimethylolethan, Trimethylolpropan und Alkylenoxid-niedermolaren Addukten davon mit einem Molekulargewicht von weniger als 500.

**5.** Verfahren wie in Anspruch 1 beschrieben, wobei die Dimethylolalkansäure Dimethylolpropionsäure ist.

**6.** Verfahren wie in Anspruch 1 beschrieben, wobei das Urethanpolymer 0,5 bis 5 Gew.-% einer Carboxylgruppe enthält.

**7.** Verfahren wie in Anspruch 1 beschrieben, wobei das tertiäre Amin Trialkylamin ist.

**8.** Verfahren wie in Anspruch 1 beschrieben, wobei das thermoplastische abplatzbeständige Überzugsmaterial auf Wasserbasis (b) eine Viskosität von 20 bis 50 Sekunden/Ford cup #4/20°C und einen Feststoffgehalt von 20 bis 50 Gew.-% besitzt.

**9.** Verfahren wie in Anspruch 1 beschrieben, wobei das thermoplastische abplatzbeständige Überzugsmaterial auf Wasserbasis (b) in einer Dicke von etwa 2 bis etwa 15 μm als Trockenfilmdicke aufgetragen wird.

**10.** Verfahren wie in Anspruch 1 beschrieben, wobei der Feststoffgehalt in dem Überzugsfilm des thermoplastischen abplatzbeständigen Überzugsmaterials auf Wasserbasis (b) eingestellt wird auf einen Bereich von 60 bis 90 Gew.-%, vorzugsweise 70 bis 80 Gew.-%.

**11.** Verfahren wie in Anspruch 1 beschrieben, wobei das thermoplastische abplatzbeständige Überzugsmaterial auf Wasserbasis (b) luftgetrocknet wird, um so **dadurch** den Feststoffgehalt im Überzugsfilm daraus einzustellen.

**12.** Gegenstand, auf welchem ein Überzugsfilm in mehrfachen Schichten gebildet wird durch das in Anspruch 1 beschriebene Verfahren.

**Revendications**

**1.** Procédé de formation d'un film de revêtement de plusieurs couches comprenant les étapes consistant à enduire un matériau de revêtement cationiquement électrodéposable (a) sur un article à recouvrir et la durcir par chauffage, puis enduire un matériau de revêtement thermoplastique à base d'eau, résistant à l'écaillage (b) et réguler une teneur en matière sèche dans le film de revêtement à 40 % en poids ou plus, puis enduire un matériau de revêtement intermédiaire à base d'eau (c) et durcir les deux films de revêtement du matériau de revêtement (b) et du matériau de revêtement (c) par chauffage, puis enduire sur ceux-ci un matériau de revêtement de finition (d) et le durcir, ledit matériau de revêtement thermoplastique à base d'eau, résistant à l'écaillage (b) étant un matériau de revêtement comprenant
une émulsion de polyuréthane de type auto-émulsionnante obtenue par augmentation d'eau et émulsification d'un prépolymère d'uréthane obtenu par la réaction (i) d'un diisocyanate aliphatique et/ou alicyclique, (ii) d'un polyétherdiol et/ou d'un polyesterdiol ayant un poids moléculaire moyen en nombre de 500 à 5000, (iii) d'un composé polyhydroxyle de faible poids moléculaire et (iv) d'un acide diméthylolalcanoïque dans un rapport en équivalents de NCO/OH compris dans la plage allant de 1,1 à 1,9 par mélange avec de l'eau après ou pendant la neutralisation avec une amine tertiaire.

**2.** Procédé selon la revendication 1, dans lequel le diisocyanate (i) est un diisocyanate alicyclique choisi parmi le 1,4-cyclohexanediisocyanate, le 1-isocyanate-3-isocyanate-méthyl-3,5,5-triméthylcyclohexane et le 4,4'-dicyclohexyl-méthanediisocyanate.

**3.** Procédé selon la revendication 1, dans lequel le polyétherdiol et/ou le polyesterdiol (ii) a un poids moléculaire moyen en nombre compris dans la plage allant de 1000 à 3000.

**4.** Procédé selon la revendication 1, dans lequel le composé polyhydroxyle de faible poids moléculaire (iii) est choisi parmi les glycols et les adduits de celui-ci à faible teneur molaire en oxyde d'alkylène ayant un poids moléculaire inférieur à 500, la glycérine, le triméthyloléthane, le triméthylolpropane et les adduits de celui-ci à faible teneur molaire en oxyde d'alkylène ayant un poids moléculaire inférieur à 500.

**5.** Procédé selon la revendication 1, dans lequel l'acide diméthylolalcanoïque est l'acide diméthylolpropionique.

**6.** Procédé selon la revendication 1, dans lequel le polymère d'uréthane comprend de 0,5 à 5 % en poids d'un groupe carboxyle.

**7.** Procédé selon la revendication 1, dans lequel l'amine tertiaire est une trialkylamine.

**8.** Procédé selon la revendication 1, dans lequel le matériau de revêtement thermoplastique à base d'eau, résistant à l'écaillage (b) a une viscosité de 20 à 50 secondes/coupe Ford #4/20 °C et une teneur en matière sèche de 20 à 50 % en poids.

9. Procédé selon la revendication 1, dans lequel le matériau de revêtement thermoplastique à base d'eau, résistant à l'écaillage (b) est enduit avec une épaisseur d'environ 2 à environ 15 $\mu$m en terme d'épaisseur du film sec.

10. Procédé selon la revendication 1, dans lequel la teneur en matière sèche du film de revêtement du matériau de revêtement thermoplastique à base d'eau, résistant à l'écaillage (b) est régulée dans la plage allant de 60 à 90 % en poids, de préférence de 70 à 80 % en poids.

11. Procédé selon la revendication 1, dans lequel le matériau de revêtement thermoplastique à base d'eau, résistant à l'écaillage (b) est séché à l'air afin de réguler la teneur en matière sèche dans le film de revêtement.

12. Article sur lequel un film de revêtement de plusieurs couches est formé par le procédé décrit selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61120673 A
- EP 0914875 A2